# EUROPEAN PATENT SPECIFICATION

(11) **EP 4 180 717 B1**
(45) Date of publication and mention of the grant of the patent: **08.10.2025**
(21) Application number: 22206598.9
(22) Date of filing: 10.11.2022
(51) Int. Cl.: F23J 13/04

(54) **A CONDENSING BOILER WITH AN IMPROVED ROOF ASSEMBLY FOR THE CONNECTION WITH COMBUSTION GAS DISCHARGE AND COMBUSTION AIR SUPPLY DUCTS**
BRENNWERTKESSEL MIT VERBESSERTER DACHANORDNUNG ZUR VERBINDUNG MIT VERBRENNUNGSGASENTLADUNGS- UND VERBRENNUNGSLUFTZUFUHRKANÄLEN
CHAUDIÈRE À CONDENSATION AVEC ENSEMBLE DE TOIT AMÉLIORÉ POUR LA CONNEXION AVEC DES CONDUITS D'ÉVACUATION DE GAZ DE COMBUSTION ET D'ALIMENTATION EN AIR DE COMBUSTION

(30) Priority: 12.11.2021 IT 202100028832
(43) Date of publication of application: 17.05.2023
(73) Proprietor: Riello S.p.A., 37045 Legnago (IT)
(72) Inventor: CIOFOLO, Noè, 37045 LEGNAGO (VR) (IT)
(74) Representative: Studio Torta S.p.A.

(56) References cited:
- EP-A2- 3 285 020
- WO-A2-2011/057894
- US-A1- 2018 195 720

## Description

### Cross-reference to related applications

This Patent claims priority from Italian Patent Application No. 102021000028832 filed on November 12, 2021.

### Technical field

The technical field of this invention relates to condensing boilers, i.e., a particular type of boiler with specific and peculiar features and requirements, such as involving the presence of a combustion gas discharge and combustion air supply. Within this technical field, this invention will deal with the problem of how to improve the "roof" of the boiler, i.e., the upper portion that closes the (box-shaped) casing of the boiler, in which this roof supports both the combustion gas exhaust duct and the combustion air supply duct.

### State of the art

As known, a condensing boiler is a device in which heat is exchanged between working fluid to be heated (usually water) and hot smoke produced by combustion of air and fuel gas. To this end, a condensing boiler comprises a burner, which is configured to release the above-mentioned heating gases, and a heat exchanger in which the hot gases are introduced, heating water circulating in special coils. These two components (burner and heat exchanger) are housed inside the casing, which has separate inlet openings for the gas, combustion air, and water to heat, and separate outlet openings for the combustion smoke and heated water. As known, due to heat migration from hot smoke to water, the water vapour in the smoke is transformed into condensate. This condensate settles by gravity in the lower portion of the heat exchanger, also called condensate collection well, and from this well must be drained. To drain the condensate inside the boiler casing, there is a siphon on one side connected to the above-mentioned well and, on the other side, on the bottom wall of the casing of the boiler, connected to an external drain duct.

According to a known configuration, and as will be the subject of this invention, the discharge of combustion gases and the supply of combustion air occurs through the roof of the boiler, i.e., the combustion gas exhaust duct and the combustion air supply duct are connected/supported by the upper closing wall of the box-shaped casing containing the burner, the heat exchanger, and, obviously, other known internal components forming the boiler. It is known to ensure that the above-mentioned ducts connected to the roof may be coaxial or separate and, in a corresponding way, the roof of the boiler may comprise a coaxial collar or two separate openings. The existence of a "splitter kit" is also known, i.e., a device to couple to the coaxial collar of the boiler separating the gas discharge from the air supply.

EP3071898 deals with the issue of how to provide a roof that offers different configurations, i.e., to provide a roof able to be coupled with both coaxial and separate ducts. Thus, the user is provided with just one component to be used in all possible external conditions for installation. For any details regarding what the boiler roof is, what coaxial collar means, and for other details, reference should be made to the knowledge of the person skilled in the art working in this technical sector of which EP3071898 is just one example. According to EP3071898, the roof, the coaxial collar, and the side holes consist of a single piece.

Below the roof, it is known to provide a plate configured to collect any inlet water and to convey it towards a drain. For example, GB2433580 describes an example of such a plate.

WO2011057894 refers to a heat exchanger with an exhaust gas discharge device configured for limiting the general encumbrances thereof.

US2018195720 refers to an air supply and exhaust suitable for being attached to an air supply aperture and to an exhaust aperture of a combustion device.

### Description of the invention

The purpose of this invention is to provide a condensing boiler with an improved roof assembly for the connection with the combustion gas exhaust and combustion air supply ducts.

In accordance with this invention, a condensing boiler is provided comprising an external, box-shaped casing comprising side walls, a bottom, and a roof (for closing the casing at the top); wherein the roof is configured to be coupled with an external gas exhaust duct and with an external combustion air supply duct. The casing houses:
- a burner supplied with gas and air and configured to produce heating gas;
- a heat exchanger supplied with the heating gas from the burner and configured to heat a working fluid.

The elements mentioned above, and how they are connected together, is a subject well known to the person skilled in the art and, thus, other details are not necessary. For example, mentioning the fact that on the bottom of the heat exchanger there is a portion for collecting condensate coupled to a siphon is an example of a detail that is implicit and known.

In this configuration, in an inventive way, the improved roof of this invention comprises:
- a frame or outer edge (preferably rectangular) configured to be coupled with the walls of the casing, which may comprise side walls, a back, and panelling to close the front.
- an outer wall or cover comprising a hole for connection to the external gas outlet duct and at least one hole for connection to the external combustion air supply duct;
- a lowered inner wall integral with the frame, wherein the inner wall is below the outer wall and is configured to act as a water collector plate;
- a connecting wall connecting the inner wall with the frame; wherein the connecting wall comprises at least one opening.

Advantageously, according to this invention, the roof of this is integrated with the collector plate and the outer wall coupled to the frame acts as a cover for the inner wall.

The inner wall preferably comprises a hole for connection with the external gas exhaust duct facing the corresponding hole of the outer wall.

The outer wall is preferably a body made separately from the frame and inner wall and joined later as a cover.

The outer wall preferably comprises a combustion air supply hole, the gas discharge hole being concentric to the combustion air supply hole. In this case, preferably, the outer wall comprises a coaxial collar at the holes for connection with the ducts.

The outer wall is preferably rectangular (like the frame) and comprises two combustion air supply holes arranged on opposite sides (one to the right and one to the left) to the gas discharge hole. In this case, preferably, each air supply hole is provided closed by a cover configured to be removed, so that the user can only open the required air supply hole, leaving the remaining one closed. Alternatively, the air supply holes are created as through holes and at least one cover configured to be applied to an air supply hole is provided, so as to leave only the required air supply hole open.

### List of drawings

Further features and advantages of this invention will be apparent from the following description of a non-limiting embodiment thereof, with reference to the accompanying drawings, wherein:
- Figure 1 is a schematic view of a condensing boilers;
- Figure 2 is a schematic view of one element that composes the roof assembly according to this invention, **i.e.,** the frame that is integral with the collection plate;
- Figures **3****,** **4,** and 6 show different examples of a second element that composes the roof assembly according to this invention, **i.e.,** possible covers that can be coupled with the frame in Figure 2 to cover the collection plate;

- Figure 5 shows an accessory of the cover in Figure 4;
- Figures 7 and 8 show two examples of roof assemblies according to this invention produced by joining the frame in Figure 2 with, respectively, the covers in Figures 3 and 6.

### Description of an embodiment of the invention

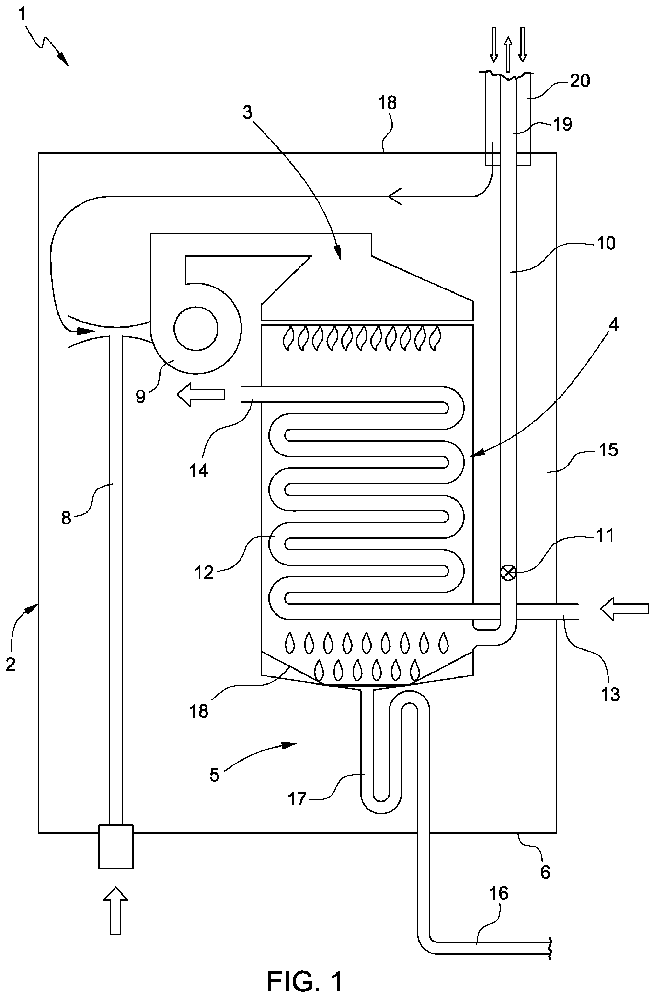

With reference to Figure 1, the reference number 1 globally denotes a boiler of the "condensing" type. The condensing boiler 1 comprises an outer case or casing 2 of the box type; a burner 3, which is arranged inside the outer casing 2 and is configured to produce heating gases; a heat exchanger 4, which is arranged inside the outer casing 2, is supplied with heating gases by the burner 3, and is configured to heat a working fluid; and a drain circuit 5, which is arranged downstream of the heat exchanger 4. A first part of the drain circuit 5 comprises a siphon 17 housed inside the outer casing 2 and configured to convey to an external drain duct 6 the condensate generated by the condensation, at least partial, of the heating gases in the heat exchanger 4. As known, in this example, the condensing boiler 1 comprises an air supply; a gas supply duct 8; a ventilator suction device 9 configured to suck air and gas to convey this mixture to the burner 3; an inner duct 10 for discharging heating gases; and a suction device 11 configured to suck the heating gases and convey them outside the condensing boiler 1 through the inner duct 10. The heat exchanger 4 comprises a coil duct 12 for supplying working fluid (usually water), which has an inlet portion 13 for the introduction of the working fluid in the condensing boiler 1 and an outlet portion 14 for discharging the working fluid from the condensing boiler 1. As known, a siphon 17 is configured to convey the condensate from a collection tank 18 where it is collected in the heat exchanger 4, towards the external drain duct 16 for the condensate and, at the same time, to prevent the heating gases from passing through the siphon 17. The reference numbers 6, 15, and 18 in Figure 1 refer to different portions of the box-shaped casing 2. In particular, the reference number 15 refers to the side walls (vertical in use), the reference number 6 to the bottom wall (horizontal in use), and the reference number 18 to the roof or upper wall (horizontal in use). As will be clear below, this roof 18 is not a single element but an assembly formed from at least two elements connected together that include a frame and a lowered collector plate (not visible in Figure 1) and an outer wall (or cover) configured to be coupled to the ducts indicated with the reference numbers 19 and 20 respectively for discharging gases (continuation of the duct 10) and supplying air.

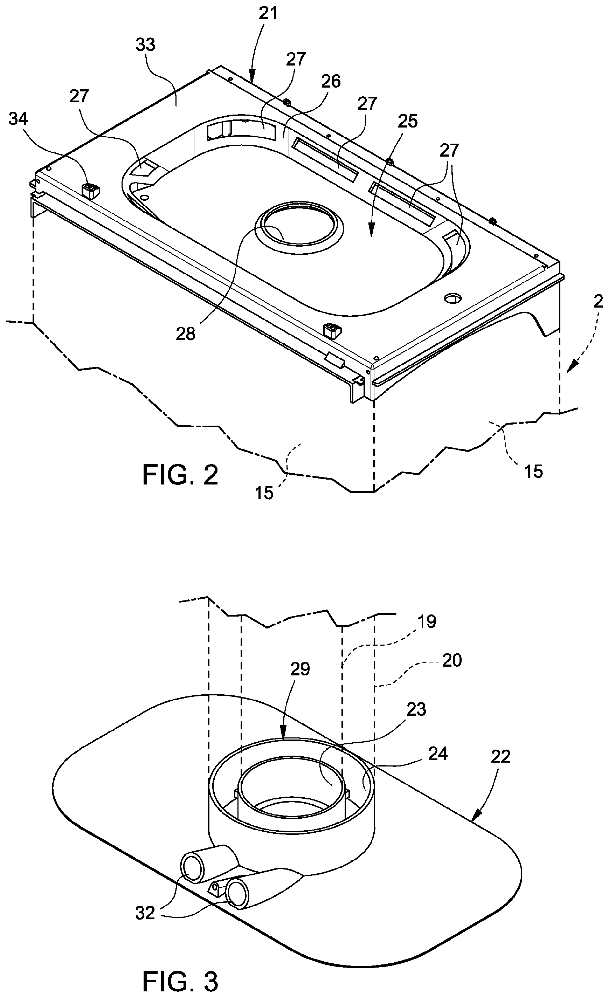

Figure 2 shows the first of the two elements mentioned above that form the roof 18, i.e., a frame 21 configured to be coupled with the side walls 15 of the casing 2 which is made integral with a lowered wall 25 that acts as a collector plate. The term "lowered" means that, once installed, the roof 18 of the wall 25 is located in a more internal position in the boiler compared to the outer edge 33 of the frame 21. As can be seen, the lowered wall 25, parallel to the bottom wall 6, comprises a hole 28 that, in use, will be aligned with the hole of another component detailed below and that supports the combustion gas exhaust duct. Between the lowered wall 25 and the edge 33 of the frame 21, there is an annular connecting wall 26 (vertical or tilted) which is provided with windows or openings 27. These windows have the function of enabling access to the combustion air in the boiler. Reference number 34 in Figure 2 represents the appendages configured to be coupled to the front panel 15 of the boiler. These appendages 34, together with any other shaped portions formed inside the frame 21 (for example, holes or ribs for connection with the expansion tank), are formed directly on the frame 21 so as not to require the presence of other, intermediate elements.

Figure 3 shows a first example of a second element that, joined with the frame in Figure 2 produces a roof assembly according to this invention. Figure 2 shows an outer wall configured to be joined to the frame 21 to be a cover for the lowered wall 25. In use, this outer wall 22 is preferably flush with the edge of the side walls 15. In Figure 2, this outer wall 22 comprises a hole 23 (with a corresponding collar) for connection with the gas exhaust duct 23 and a hole 24 (with a corresponding collar) for connection with an air supply duct. In this example, the hole 23 is concentric to the other hole 24. This concentric arrangement is known just like the presence of the openings indicated with the number 32 for introducing inspection probes.

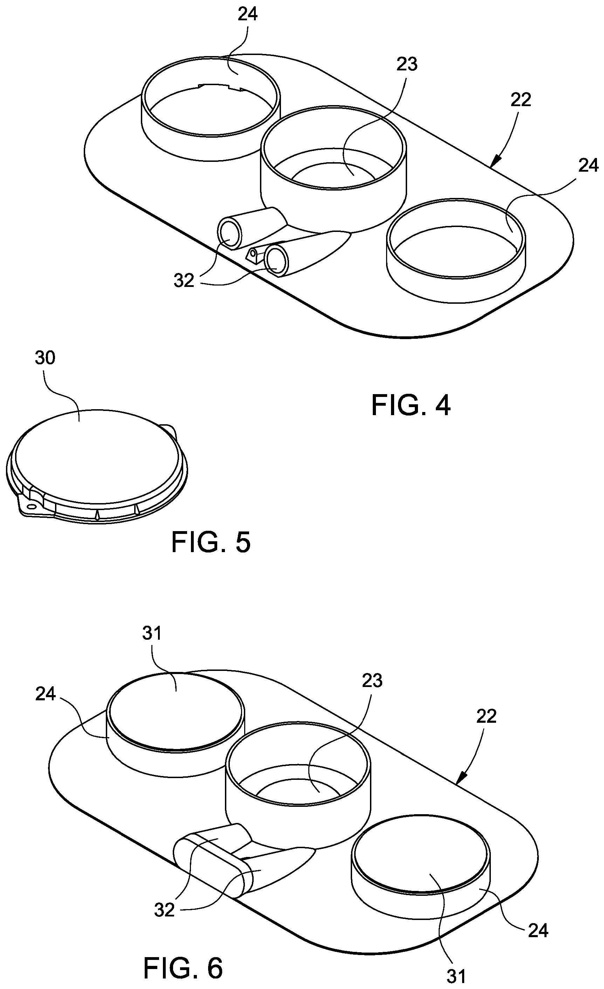

Figures 4 and 6 show two alternate examples in relation to the cover 22 in Figure 3. In this example, the cover or outer wall 22 comprises a hole 23 for connection with the gas exhaust duct and two holes 24 for connection with the air supply duct. The frame 21 is preferably rectangular, so that the hole 23 is in a central position and two holes 24 are obtained on the sides of the hole 23. The difference between the example of Figure 4 and that of Figure 6 is the fact that the holes in Figure 4 are obtained as through holes while the holes in Figure 6 are blind holes, i.e., they have collars that are plugged on the outside by covers 31. These solutions enable the operator, in different ways, to choose which hole 24 to use for ease and to leave the remaining one plugged. According to the example in Figure 4, the hole 24 not used must be closed with a special closure 30 shown in Figure 5 and provided with the boiler or sourced separately, for example together with the splitter kit mentioned earlier. According to the example in Figure 6, the operator must remove the cover 31 of the hole 24 chosen, leaving the other plugged. To this end, the coupling of the plug 31 with the hole 24 is of the easily removable type (as known).

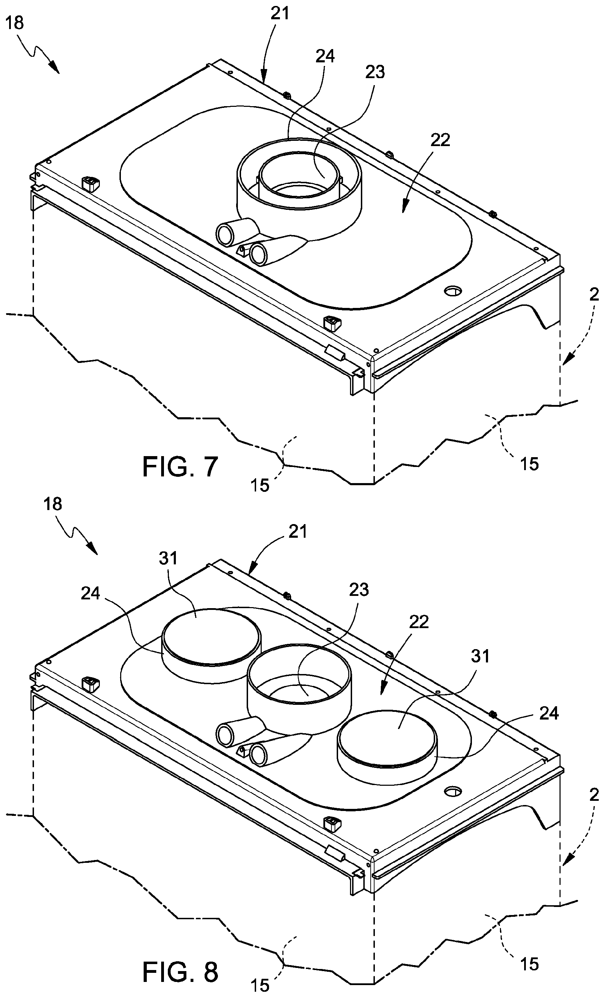

Finally, for completeness, Figures 7 and 8 show two examples of roofs 18 according to this invention, i.e., made by joining (mechanically, for example) the covers in Figures 3 and 6 with the frame 21 in Figure 2.

Finally, it is clear that, variations can be made to this invention in relation to the embodiments shown in the figures without, however, departing from the scope of protection of the attached claims.

## Claims

1. A condensing boiler (1) comprising:
- a box-shaped outer casing (2) comprising side walls (15), a bottom (6) and a roof (18); wherein the roof (18) is configured to be coupled to an external gas exhaust duct (19) and an external combustion air supply duct (20);
- a burner (3) housed inside the casing (2) and configured to produce heating gas;
- a heat exchanger (4) housed inside the casing (2), the heat exchanger (4) being supplied with the heating gas from the burner (3) and configured to heat a working fluid;
- wherein the roof (18) comprises:
- a frame (21) configured to be coupled to the side walls (15) of the casing (2);
- an outer wall (22) comprising a hole (23) for connection to the external gas outlet duct (19) and at least a hole (24) for connection to the external combustion air supply duct (20);
- a lowered inner wall (25) integral with the frame (21), wherein the inner wall (25) is below the outer wall (22) and is configured to act as a water collector plate;
- a connecting wall (26) connecting the inner wall (25) with the frame (21); wherein the connecting wall (26) comprises at least one opening (27).

2. The boiler as claimed in claim 1, wherein the inner wall (25) comprises a hole (28) for coupling with the external gas discharge duct (19) facing the corresponding hole (23) of the outer wall (22).

3. The boiler as claimed in any one of the preceding claims, wherein the outer wall (22) is a separate body and subsequently joined to the casing (21) as a cover for the inner wall (25).

4. The boiler as claimed in claim 3, wherein the outer wall (22) comprises a combustion air supply hole (24), the gas discharge hole (23) being concentric to the combustion air supply hole (24).

5. The boiler as claimed in claim 4, wherein the outer wall (22) comprises a coaxial collar (29) at the holes (23, 24) for coupling with the gas discharge (23) and combustion air supply (24) ducts.

6. The boiler as claimed in claim 3, wherein the outer wall (22) comprises two combustion air supply holes (24) disposed on either side of the gas discharge hole (23).

7. The boiler as claimed in claim 6, wherein each air supply hole (24) is provided as closed by a cover (31) configured to be removed.

8. The boiler as claimed in claim 6, wherein the air supply holes (24) are made as through holes, the boiler (1) comprising at least one cover (30) configured to be applied to an air supply hole (24).

## Patentansprüche

1. Brennwertheizkessel (1), umfassend:
- ein kastenförmiges Außengehäuse (2), das Seitenwände (15), einen Boden (6) und ein Dach (18) umfasst; wobei das Dach (18) konfiguriert ist, um mit einem externen Gasabzugskanal (19) und einem externen Verbrennungsluftzufuhrkanal (20) gekoppelt zu werden;
- einen Brenner (3), der innerhalb des Gehäuses (2) untergebracht und konfiguriert ist, um Heizgas zu erzeugen;
- einen Wärmetauscher (4), der innerhalb des Gehäuses (2) untergebracht ist, wobei der Wärmetauscher (4) mit dem Heizgas vom Brenner (3) versorgt wird und der so konfiguriert ist, dass er ein Arbeitsfluid erwärmt;
- wobei das Dach (18) umfasst:
- einen Rahmen (21), der konfiguriert ist, um an die Seitenwände (15) des Gehäuses (2) gekoppelt zu werden;
- eine Außenwand (22), die ein Loch (23) zur Verbindung mit dem externen Gasauslasskanal (19) und mindestens ein Loch (24) zur Verbindung mit dem externen Verbrennungsluftzufuhrkanal (20) umfasst;
- eine abgesenkte Innenwand (25), die einstückig mit dem Rahmen (21) ausgebildet ist, wobei die Innenwand (25) unterhalb der Außenwand (22) liegt und so konfiguriert ist, dass sie als Wassersammelplatte wirkt;
- eine Verbindungswand (26), die die Innenwand (25) mit dem Rahmen (21) verbindet; wobei die Verbindungswand (26) mindestens eine Öffnung (27) umfasst.

2. Heizkessel nach Anspruch 1, wobei die Innenwand (25) ein Loch (28) zur Kopplung mit dem externen Gasauslaufkanal (19) umfasst, das dem entsprechenden Loch (23) der Außenwand (22) zugewandt ist.

3. Heizkessel nach einem der vorhergehenden Ansprüche, wobei die Außenwand (22) ein separater Körper ist und anschließend mit dem Gehäuse (21) als Abdeckung für die Innenwand (25) verbunden wird.

4. Heizkessel nach Anspruch 3, wobei die Außenwand (22) ein Verbrennungsluftzufuhrloch (24) umfasst, wobei das Gasauslaufloch (23) konzentrisch zu dem Verbrennungsluftzufuhrloch (24) ist.

5. Heizkessel nach Anspruch 4, wobei die Außenwand (22) an den Löchern (23, 24) einen koaxialen Kragen (29) zum Koppeln mit dem Gasauslauf-(23) und Verbrennungsluftzufuhrkanal (24) umfasst.

6. Heizkessel nach Anspruch 3, wobei die Außenwand (22) zwei Verbrennungsluftzufuhrlöcher (24) umfasst, die auf jeder Seite des Gasauslauflochs (23) angeordnet sind.

7. Heizkessel nach Anspruch 6, wobei jedes Luftzufuhrloch (24) durch eine Abdeckung (31) verschlossen bereitgestellt ist, die dazu konfiguriert ist, entfernt zu werden.

8. Heizkessel nach Anspruch 6, wobei die Luftzufuhrlöcher (24) als Durchgangslöcher ausgebildet sind, wobei der Heizkessel (1) mindestens eine Abdeckung (30) umfasst, die dazu konfiguriert ist, an einem Luftzufuhrloch (24) angebracht zu werden.

## Revendications

1. Chaudière à condensation (1) comprenant :
- une enveloppe extérieure (2) en forme de boîte comprenant des parois latérales (15), un fond (6) et un toit (18) ; le toit (18) étant configuré pour être couplé à un conduit externe (19) d'évacuation des gaz et à un conduit externe d'alimentation (20) en air de combustion ;
- un brûleur (3) logé à l'intérieur de l'enveloppe (2) et configuré pour produire du gaz de chauffage ;
- un échangeur de chaleur (4) logé à l'intérieur de l'enveloppe (2), l'échangeur de chaleur (4) étant alimenté en gaz de chauffage par le brûleur (3) et configuré pour chauffer un fluide de travail ;
- le toit (18) comprenant :
- un cadre (21) configuré pour être couplé aux parois latérales (15) de l'enveloppe (2) ;
- une paroi extérieure (22) comprenant un orifice (23) de raccordement au conduit externe (19) d'évacuation des gaz et au moins un orifice (24) de raccordement au conduit externe d'alimentation (20) en air de combustion ;
- une paroi intérieure abaissée (25) solidaire du cadre (21), la paroi intérieure (25) se trouvant en dessous de la paroi extérieure (22) et étant configurée pour agir en tant que plaque collectrice d'eau ;
- une paroi de liaison (26) reliant la paroi intérieure (25) au cadre (21) ; la paroi de liaison (26) comprenant au moins une ouverture (27).

2. Chaudière selon la revendication 1, la paroi intérieure (25) comprenant un orifice (28) d'accouplement au conduit externe (19) d'évacuation des gaz faisant face à l'orifice correspondant (23) de la paroi extérieure (22).

3. Chaudière selon l'une quelconque des revendications précédentes, la paroi extérieure (22) étant un corps séparé qui est ensuite relié à l'enveloppe (21) comme un couvercle de la paroi intérieure (25).

4. Chaudière selon la revendication 3, la paroi extérieure (22) comprenant un orifice d'alimentation (24) en air de combustion, l'orifice d'évacuation (23) des gaz étant concentrique à l'orifice d'alimentation (24) en air de combustion.

5. Chaudière selon la revendication 4, la paroi extérieure (22) comprenant un collier coaxial (29) au niveau des orifices (23, 24) d'accouplement aux conduits d'évacuation (23) des gaz et d'alimentation (24) en air de combustion.

6. Chaudière selon la revendication 3, la paroi extérieure (22) comprenant deux orifices d'alimentation (24) en air de combustion disposés de part et d'autre de l'orifice (23) d'évacuation des gaz.

7. Chaudière selon la revendication 6, chaque orifice d'alimentation (24) en air étant fermé par un couvercle (31) configuré pour être retiré.

8. Chaudière selon la revendication 6, les orifices d'alimentation (24) en air étant des orifices traversants, la chaudière (1) comprenant au moins un couvercle (30) configuré pour être appliqué sur un orifice d'alimentation (24) en air.
